# EUROPÄISCHE PATENTSCHRIFT

(11) **EP 2 260 357 B1**
(45) Veröffentlichungstag und Bekanntmachung des Hinweises auf die Patenterteilung: **10.04.2013**
(21) Anmeldenummer: 09720967.0
(22) Anmeldetag: 07.02.2009
(51) Int. Cl.: G05B 19/418, G06F 9/445, G05B 19/042, G05B 19/05, G05B 19/408, G05B 19/4155

(54) **VORRICHTUNG ZUR STEUERUNG EINER ANLAGE UND VERFAHREN ZUR EINRICHTUNG UND BEDIENUNG DER STEUERUNG EINER ANLAGE**
DEVICE FOR CONTROLLING A SYSTEM AND METHOD FOR SETTING UP AND OPERATING THE CONTROLLER OF A SYSTEM
DISPOSITIF POUR COMMANDER UNE INSTALLATION ET PROCÉDÉ POUR INSTALLER ET PILOTER LA COMMANDE D'UNE INSTALLATION

(30) Priorität: 11.03.2008 DE 102008013629; 28.10.2008 DE 102008053557
(43) Veröffentlichungstag der Anmeldung: 15.12.2010
(73) Patentinhaber: SEW-EURODRIVE GmbH & Co. KG, 76646 Bruchsal (DE)
(72) Erfinder: SIMON, Olaf, 76646 Bruchsal (DE)
(86) Internationale Anmeldenummer: PCT/EP2009/000859
(87) Internationale Veröffentlichungsnummer: WO 2009/112130

(56) Entgegenhaltungen:
- EP-A1- 1 355 208
- EP-A2- 1 400 877
- DE-A1- 10 128 158
- US-A1- 2004 138 767

## Beschreibung

Die Erfindung betrifft eine Vorrichtung zur Steuerung einer Anlage und ein Verfahren zur Einrichtung und Bedienung der Steuerung einer Anlage.

Aus der EP 1 355 208 A1 ist ein System zur Automatisierung technischer Prozesse bekannt, bei welchem ein Entwicklungsmodus und ein Laufzeitmodus vorgesehen sind, zwischen denen ein Anwender hin- und hersehalten kann, wobei im Entwicklungsmodus geometrische Figuren, die Steuermodule repräsentieren, in einem ersten Schritt einer Entwicklungsphase als graphische Objekte dargestellt werden, in einem zweiten Schritt die Steuermodule konfiguriert werden und in einem dritten Schritt durch vorgegebene Regeln so miteinander verbunden werden können, wie es einem Programmablauf entspricht. Nach Abschluss der Entwicklungsphase kann der Laufzeümodus für das fertige Steuerprogramm gestartet werden.

Aus der EP 1 400 877 A2 sind ein Regler und ein Verfahren zum Betreiben eines Reglers bekannt, wobei in einem Antriebsregler eine Leerfunktion installiert ist, welche die bei der Inbetriebnahme parametrierte, maximal zulässige Rechenzeit der Echtzeit-Zusatzfunktionen verbraucht, ohne jedoch eine tatsächliche Funktion auszuüben, und wobei beim Nachladen der Echtzeit-Zusatzfunktion diese Leerfunktion von der nachladbaren Zusatzfunktion überschrieben wird.

Aus der DE 101 28 158 A1 sind ein Programmierwerkzeug und ein Programmierverfahren bekannt, bei welchen zwischen einem Benutzer und einem speicherprogrammierbaren Steuergerät ein Interface derart schaltbar ist, dass dem Benutzer eine Eingabemaske zur Eingabe technologischer Parameter im Rahmen der Parametrierung oder des Monitorin angeboten ist, wobei der Prozess zumindest im Wesentlichen im Steuergerät in Form von unterscheidbaren, fest in Art und zeitlicher Abfolge vorgegebenen Funktionsbausteinen ausgebildet ist und zumindest einem Teil dieser Funktionsbausteine jeweils eine entsprechende Eingabemaske für Parametersätze zugeordnet ist.

Aus der DE 10 2004 020 994 A1 sind ein Verfahren und eine Vorrichtung zum computergestützten Konstruieren einer sicherheitsgerichteten elektrischen Schaltung bekannt, wobei bei dem Verfahren eine Vielzahl von Schaltungskomponenten in einer computerimplementierten Bibliothek bereitgestellt werden und aus dieser Schaltungskomponenten computergestützt ausgewählt und miteinander verknüpft werden und anschließend automatisiert darauf geprüft werden, ob die ausgewählten und verknüpften Schaltungskomponenten den Konstruktionsregeln von zumindest einem definierten Regelsatz vollständig entsprechen. Aus den ausgewählten Daten wird anschließend ein Anwenderprogramm erstellt, das auf eine Chipkarte übertragen wird, die für eine Sicherheitssteuerung vorgesehen ist.

Aus der EP1 847 891 A1 ist eine sichere Parametrierung einer Sicherheitsschaltung bekannt, bei welcher in einem ersten Kontrollschritt eine Anzeige getestet wird, indem alle LEDs der Anzeige ein- und wieder ausgeschaltet werden, bei welcher in einem nächsten Kontrollschritt ein Anwender an einem DIP-Schalter die gewünschten Betriebsparameter einstellt, bei welcher durch eine erste Betätigung eines Kontrollknopfes die eingestellten Betriebsparameter in ein Verarbeitungsmodul eingelesen werden, bei welcher in einem nächsten Schritt das Verarbeitungsmodul die eingelesenen Betriebsparameter auf den LEDs der Anzeige ausgibt und bei welcher durch ein weiteres Betätigen des Kontrollknopfes die Betriebsparameter freigegeben werden. Es wird somit ein Sicherheitsschaltgerät zunächst parametriert und dann zum Betrieb freigegeben.

Es ist bekannt, Schaltungen durch mehr oder weniger komplizierte und umfangreiche Stromlaufpläne zu darstellen. Beispielsweise ist aus der US 6 633 278 B1 ein Minikontroller für zu Relaisschaltungen oder Stromlaufpläne bekannt, bei dem eine Displayeinheit in eine Matrix mit n*m Eintragsfeldern unterteilt ist, wobei jedes Eintragsfeld durch eine x*y Pixelmatrix gebildet wird. Dieser Minikontroller ist somit für die Programmierung eines einfachen Schaltgeräts, welches durch die in der US 6 633 278 B1 dargestellten einfachen Stromlaufpläne definiert sein kann, eingerichtet.

Aus der JP 8-77872 AA ist ein Ladegerät für einen programmierbaren Controller bekannt, bei welchem ein Schalter in Kontaktposition zu dem Daumen der haltenden Hand vorgesehen ist, wobei mit dem Schalter zwischen zwei Anzeigezuständen geschaltet werden kann.

Der Erfindung liegt die Aufgabe zugrunde, eine Vorrichtung zur Steuerung einer Anlage und ein Verfahren zur Einrichtung und Bedienung der Steuerung einer Anlage zu schaffen, wobei die Vorrichtung universell einsetzbar sein soll und die Vorkenntnisse für die Durchführung des Verfahrens und die Bedienung der Vorrichtung möglichst gering sein sollen.

Erfindungsgemäß wird die Aufgabe bei der Steuereinheit nach den in Anspruch 1 angegebenen Merkmalen und bei dem Verfahren nach den in Anspruch 7 angegebenen Merkmalen gelöst.

Wichtige Merkmale der Erfindung einer Vorrichtung zur Steuerung einer Anlage sind in Anspruch 1 angegeben. Insbesondere ist eine Steuereinheit vorgesehen, die zur Abarbeitung eines Steuerungsprogramms der Anlage eingerichtet ist, wobei das Steuerungsprogramm Funktionsmodule aufweist, mit denen Aktoren der Anlage ansteuerbar und/oder Sensoren der Anlage auswertbar und/oder Daten mit wenigstens einem weiteren Kommunikationsteilnehmer der Anlage austauschbar sind, und dass eine Visualisierungseinheit, mit welcher das Steuerungsprogramm funktionell für einen Bediener darstellbar ist, wobei in der funktionellen Darstellung des Steuerungsprogramms jedes Funktionsmodul des Steuerungsprogramms durch ein Darstellungsmodul repräsentiert ist, vorgesehen ist, wobei die Visualisierungseinheit eine Bedienoberfläche mit Fensterstruktur hat, jedes Darstellungsmodul wenigstens ein Fenster der Fensterstruktur und wenigstens ein aktives Steuerelement in dem Fenster bereitstellt, in dem Fenster eines Darstellungsmoduls Zustände des mit diesem Darstellungsmodul repräsentierten Funktionsmoduls anzeigbar sind und/oder mit dem wenigstens einen aktiven Steuerelement eine Parametrierung des mit diesem Darstellungsmodul repräsentierten Funktionsmoduls veränderbar ist, wobei durch die Parametrierung das Verhalten des Funktionsmoduls beeinflussbar ist, in der Steuereinheit eine Bibliothek mit ausführbaren Funktionsmodulen hinterlegt ist, in der Visualisierungseinheit zu jedem Funktionsmodul der Bibliothek ein zugeordnetes Darstellungsmodul vorgehalten ist, Mittel zur Erzeugung einer Konfiguration des Steuerungsprogramms ausgebildet sind, wobei mit den Mitteln Funktionsmodule der Bibliothek durch Aktivierung des zugeordneten Darstellungsmoduls in das Steuerungsprogramm einbindbar sind, und die aktivierten Darstellungsmodule jeweils einen Teil der funktionellen Darstellung des Steuerungsprogramms bilden und zur Laufzeit des Steuerungsprogramms zur Statusanzeige und/oder Parametrierung des jeweiligen Funktionsmoduls verwendbar sind. Unter dem Begriff Funktionsmodule sind dabei eigenständige Bausteine für eine das Steuerungsprogramm abbindende Steuerungssoftware zu verstehen, die ausführbar sind und nicht mehr kompliert werden müssen. Diese Funktionsmodule stellen jeweils eine bestimmt Funktionalität bereit, die durch Parametrierung gesteuert bzw. angepasst werden kann. Unter dem Begriff Darstellungsmodule sind eigenständige Bausteine einer Darstellungssoftware zu verstehen, die modular in die von der Darstellungssoftware erzeugte Anzeige eingebunden werden können, und die über standardisierte Mittel, die aktiven Steuerelemente, zur Beeinflussung der Darstellung und zur Parametrierung der zugeordneten Funktionsmodule betätigt werden können.

Gegenüber der EP 1 847 891 A1, der US 6 633 278 B1 und der JP 8-77872 AA wird durch die Verwendung fertig ausführbarer Funktionsmodule, die durch Auswahl und Bedienung von zugeordneten Darstellungsmodulen aktiviert und beeinflusst werden können, eine erheblich größere Flexibilität der Vorrichtung erreicht, die den Einsatz als Steuerung einer Anlage, die beispielsweise als Fertigungsanlage komplexe Aufgaben ausführen soll, überhaupt erst ermöglicht. Ein weiterer Vorteil der Erfindung gegenüber den genannten Druckschriften ist, dass eine Beeinflussung des Steuerungsprogramms nach Aktivierung der Funktionsmodule möglich ist.

Vorzugsweise sind die Mittel zur Erzeugung einer Konfiguration an der Visualisierungseinheit ausgebildet. Es kann somit vorgesehen sein, dass die Mittel zur Erzeugung einer Konfiguration in die Fensterstruktur der Bedienoberfläche integriert sind und/oder dass die Mittel zur Erzeugung einer Konfiguration aktive Steuerelemente zur Aktivierung der Darstellungsmodule bereitstellen. Es ergibt sich somit eine einfach handhabbare Vorrichtung, die wegen ihres geringen Platzbedarfs in unmittelbarer Nähe zu der gesteuerten Anlage aufgestellt werden kann. Die Verwendung von aktiven Steuerelementen lässt Tastaturen und Knöpfe verzichtbar werden, wodurch die Vorrichtung gegen Beschädigung durch Verunreinigungen robuster ist und flexibler an Anforderungen eines Bedieners angepasst werden kann.

Es ist vorgesehen dass die Aktivierung der Darstellungsmodule und das Einbindens von Funktionsmodulen in das Steuerprogramm während der Laufzeit des Steuerungsprogramms ausführbar ist. Von Vorteil ist dabei, dass ein Bediener die Auswirkungen einer Änderung von Betriebsabläufen in der gesteuerten Anlage unmittelbar erkennen kann, und dass die Betriebsabläufe einfach optimierbar sind.

Zur Lösung der Aufgabe ist bei der Erfindung eines Verfahrens zur Einrichtung und Bedienung der Steuerung einer Anlage vorgesehen, dass die Steuerung mit einer Vorrichtung ausgeführt wird, welche eine Steuereinheit aufweist, die zur Abarbeitung eines Steuerungsprogramms der Anlage eingerichtet ist, dass das Steuerungsprogramm Funktionsmodule aufweist, mit denen Aktoren der Anlage ansteuerbar und/oder Sensoren der Anlage auswertbar und/oder Daten mit Kommunikationsteilnehmern der Anlage austauschbar sind, dass die Vorrichtung weiter eine Visualisierungseinheit aufweist, mit welcher das Steuerungsprogramm funktionell für einen Bediener darstellbar ist, wobei in der Darstellung die Funktionsmodule durch Darstellungsmodule repräsentiert sind, und dass in einem ersten Schritt das Steuerungsprogramm zur Einrichtung der Steuerung konfiguriert wird, indem an der Visualisierungseinheit wenigstens ein Darstellungsmodul aus einer Mehrzahl in einer Bibliothek vorgehaltener Darstellungsmodule ausgewählt und zur Anzeige gebracht und aktiviert wird, wobei durch die Aktivierung des wenigstens einen Darstellungsmoduls wenigstens ein diesem Darstellungsmodul zugeordnetes, ausführbares Funktionsmodul aus einer Bibliothek in der Steuereinheit in das Steuerungsprogramm eingebunden wird, und dass in wenigstens einem weiteren Schritt die Steuerung bedient wird, indem das eingebundene Funktionsmodul oder die eingebundenen Funktionsmodule über die Visualisierungseinheit, insbesondere über aktive Steuerelemente des Darstellungsmoduls, durch Parametrierung angesteuert wird/werden, wobei die Parametrierung eines eingebundenen Funktionsmoduls den Ablauf dieses Funktionsmoduls in dem Steuerungsprogramm bestimmt und/oder beeinflusst.

Eine Ausgestaltung des erfindungsgemäßen Verfahrens kann vorsehen, dass die Einbindung der den aktivierten Darstellungsmodulen zugeordneten Funktionsmodule in das Steuerungsprogramm durch Parameterübergabe, insbesondere Übergabe von Konfigurationsdaten, an die Steuereinheit bewirkt wird. Somit ist eine Veränderung des Steuerungsprogramms durch Einbindung zusätzlicher Funktionsmodule oder Entfernung nicht mehr benötigter Funktionsmodule ohne erneute Kompilierung der Steuerungssoftware des Steuerungsprogramms durchführbar.

Bei einer vorteilhaften Ausgestaltung kann vorgesehen sein, dass die Aktivierung der Darstellungsmodule über an der Visualisierungseinheit ausgebildete Mittel zur Erzeugung einer Konfiguration des Steuerungsprogramms bewirkt wird, insbesondere durch Übergabe und/oder Eingabe von Konfigurationsdaten an die Visualisierungseinheit. Somit wird erreicht, dass die Darstellung an der Visualisierungseinheit automatisch ein getreues Abbild der Konfiguration des Steuerungsprogramms bildet, ohne dass aufwändige Überprüfungen benötigt werden.

Besonders einfach ist es dabei, wenn die Konfigurationsdaten zur Aktivierung eines Darstellungsmoduls identisch mit den Konfigurationsdaten zur Einbindung des zugeordneten Funktionsmoduls in das Steuerungsprogramm sind.

Besonders einfache und übersichtliche Bedieneigenschaften werden erreicht, wenn die Eingabe der Konfigurationsdaten zur Aktivierung eines Darstellungsmoduls und die Übergabe der Konfigurationsdaten an die Steuereinheit zur Einbindung des zugeordneten Funktionsmoduls in das Steuerungsprogramm in einem Bedienschritt erfolgen.

Gemäß einer Ausgestaltung der Erfindung kann vorgesehen sein, dass die funktionelle Darstellung des ablaufenden Steuerungsprogramms an der Visualisierungseinheit in Echtzeit aktualisiert wird. Somit können beispielweise Probeläufe und Optimierungen des Anlagebetriebs während des Betriebs der Anlage oder während eines Probetaufs der Anlage durchgeführt werden.

Ein vielfältig einsetzbares Verfahren ergibt sich beispielsweise, wenn das Steuerungsprogramm zumindest während des wenigstens einen weiteren Schrittes in der Steuereinheit ausgeführt wird und die Anlage steuert.

Besonders günstig ist es, wenn zur Ausführung des Verfahrens eine erfindungsgemäße Vorrichtung eingesetzt wird.

Die erfindungsgemäße Vorrichtung zur Steuerung einer Anlage kann mit Vorteil bei einer Steuereinheit einer Anlage eingesetzt werden, die einen Mikrokontroller, Mittel zur Eingabe von Parametern und Anschlüssen für Sensoren und/oder Aktoren der Anlage aufweist, wobei im Mikrokontroller eine Bibliothek von Funktionsmodulen bereitgestellt ist und durch jedes Funktionsmodul wenigstens ein Anschluss für einen Aktor ansteuerbar und/oder wenigstens ein Anschluss für einen Sensor auslesbar und/oder wenigstens ein weiteres Funktionsmodul ansteuerbar ist, bei der in dem Mikrokontroller ein Verwaltungsmodul kontinuierlich ausgeführt wird, der Mikrokontroller also zur Ausführung eines Verwaltungsmoduls eingerichtet ist, bei der das Verwaltungsmodul mit den Mitteln zur Parameterübergabe parametrierbar ist, bei der die Funktionsmodule aus der Bibliothek durch Parameterübergabe an das Verwaltungsmodul aufrufbar sind und bei der die Funktionsmodule durch Parametrierung steuerbar sind, wobei die Parametrierung der Funktionsmodule durch Parameterübergabe an das Verwaltungsmodul durchführbar ist. Unter einem Mikrokontroller wird die Vereinigung eines Mikroprozessors mit wenigstens einer Peripheriefunktion, beispielsweise einem Speicher, zu einer baulichen Einheit, beispielsweise in einem Halbleiterchip, verstanden. Unter einem Funktionsmodul und einem Verwaltungsmodul werden allgemein abgeschlossene Komponenten einer Software verstanden, die über eine computerimplementierte Schnittstelle Datenelemente empfangen und abgeben, welche zum Ausführen der Komponente nötig sind bzw. im Verlauf des Ausführens von der Komponente erzeugt werden. Ein Funktionsmodul beziehungsweise ein Veraltungsmodul umfasst somit Datenstrukturen und Verarbeitungsschritte, wobei insbesondere die Verarbeitungsschritte die Funktionalität des Funktionsmoduls charakterisieren und das Funktionsmodul zur Bewirkung dieser Funktionalität wiederholt aufrufbar ist. Ein Verwaltungsmodul unterscheidet sich von einem Funktionsmodul dadurch, dass es hierarchisch diesen gegenüber höhergestellt ist. Vorzugsweise wird ein Verwaltungsmodul kontinuierlich, das heißt zyklisch wiederkehrend im Wesentlichen ohne Unterbrechung, ausgeführt und dient zur Bereitstellung elementarer Grundfunktionen wie Anzeige oder Ansteuerung eines Ausgabemittels, Abfrage eines Eingabemittels und Ordnung des Aufrufs der Funktionsmodule sowie weiterer, für einen Computer oder eine elektronische Steuereinheit typischer Grundfunktionen. Unter Aufrufen eines Funktionsmoduls werden diejenigen computerimplementierten Verfahrensschritte verstanden, die nötig sind, um das Ausführen eines Funktionsmoduls zu bewirken. Das Aufrufen kann insbesondere eine Parameterübergabe umfassen, wobei ein Parameter beispielsweise ein veränderliches Element eines Funktionsmoduls ist, welches bei der Definition des Funktionsmoduls formal festgelegt und zum Aufruf oder während der Ausführung des Funktionsmoduls zur Beeinflussung des Ablaufs mit einem, auch mehrkomponentigen, Wert, auch mehrfach, belegbar ist. Die Steuereinheit ist vorteilhaft bei einer Anlage einsetzbar, die zur Fertigung, Be- oder Verarbeitung von Sachen, also von körperlichen Gegenständen, auch Flüssigkeiten, Gasen oder Schültgütem, oder zum Transport von Sachen oder zur Förderung von Sachen vorgesehen ist und Antriebseinheiten oder Steuerelemente wie Ventile oder Schütze oder dergleichen umfasst. Die Antriebseinheiten oder Steuerelemente stellen Aktoren dar, deren Betriebszustand mit Sensoren überwacht oder festgestellt wird. Weitere Sensoren können zur Feststellung von Umgebungs- oder Prozessbedingungen, beispielsweise Temperaturen, Drücken, Luftfeuchtigkeiten, Gaszusammensetzungen, Positionen von Werkzeugen, Transportmitteln und allgemeinen Sachen, Farbe und Konsistenz von Oberflächen und ähnlichem vorgesehen sein. Die Steuereinheit ist mit wenigstens einer Anschlüsse umfassenden Schnittstelle versehen, welche die zur Ansteuerung der Aktoren erforderlichen, physikalischen Signale, beispielsweise Ströme, Spannungen oder Lichtsignale, anhand von übergebenen, computerimplementierten und insbesondere von den Funktionsmodulen ausgeführten Steuerbefehlen erzeugt und welche die von den Sensoren erzeugten physikalischen Signale in computerimplementiert vorliegende Werte, insbesondere Parameter für die Funktionsmodule oder für allgemeine computerimplementierte Prozessgrößen, umsetzt. Die Mittel zur Eingabe von Parametern sind vorzugsweise als Schnittstelle ausgebildet, die beispielsweise von einem externen Gerät, einer übergeordneten oder nebengeordneten Steuereinheit, oder einem Eingabemittel, einer Tastatur oder einem Touchscreen oder einem Speichermedium oder einem tragbaren Computer, bedienbar ist zum Setzen von Parametern auf bestimmte, gewünschte Werte.

Die Erfindung ist vorteilhaft einsetzbar bei Systemen, welche nach der Harvard-Architektur entworfen sind, bei denen also Befehlsspeicher und Datenspeicher physisch getrennt sind. Die Befehlssequenzen der Funktionsmodule sind in einem unveränderlichen Befehlsspeicher, die zur Steuerung des Ablaufs und somit der Funktionalität erforderlichen Parameter in einem veränderlichen Datenspeicher in einem veränderlichen Befehlsspeicher ablegbar, und die Konfiguration der Software der Steuereinheit erfolgt lediglich durch Festlegung von Parametern im Datenspeicher, während die Befehlssequenzen unverändert bleiben. Insbesondere ist im Gegensatz zu einer Kompilierung ein Einfügen von zusätzlichen Programmzeilen zur Konfiguration vor Kompilierung verzichtbar. Der Bediener, der eine erfindungsgemäß gestaltete Steuereinheit für den Einsatz in einer Anlage an die Erfordernisse und Gegebenheiten der Anlage anpassen möchte, muss somit im Wesentlichen über keine Programmierkenntnisse verfügen und wird dennoch in der Lage sein, eine fehlerfrei ausführbare Steuerungssoftware in der Steuereinheit zu erzeugen. Die Steuereinheit ist somit universell einsetzbar und kann insbesondere in Anlagen mit dezentraler Steuerungs- und Regelungstechnik gemeinsam mit den mit ihr verbundenen Aktoren und Sensoren die kleinste hierarchische Zelle bilden.

Eine Ausgestaltung der Erfindung kann vorsehen, dass jedes Funktionsmodul einen ausführbaren Funktionalitätsblock hat, wobei der Funktionalitätsblock durch eine Parametrierung steuerbar ist. Der Funktionalitätsblock ist vorzugsweise im Befehlsspeicher abgelegt und umfasst die Programmzeilen beziehungsweise Befehlsfolgen, die nach Aufruf des Funktionsmoduls ausgeführt werden.

Eine Ausgestaltung der Erfindung kann vorsehen, dass jedes Funktionsmodule einen Parameterblock hat zur Aufnahme der bei einer Parametrierung übergebenen Parameter. Der Parameterblock ist vorzugsweise im Datenspeicher abgelegt beziehungsweise reserviert und somit frei mit Werten belegbar.

Eine Ausgestaltung der Erfindung kann vorsehen, dass jedes Funktionsmodul einen Signalblock hat, mit dem ein Anschluss für einen Aktor ansteuerbar und/oder ein Anschluss für einen Sensor auslesbar und/oder ein weiteres Funktionsmodul ansteuerbar ist. Der Signalblock bildet vorzugsweise die computerimplementierte Seite der Ansteuerungsbeziehungsweise Ausleseschnittstelle, insbesondere als Treiber für die Anschlüsse. Besonders günstig ist es, wenn die Signalblöcke der Funktionsmodule identisch sind, wenn also die Funktionsmodule beispielsweise gemeinsame Treiber verwenden, und/oder wenn die Parameterblöcke der Funktionsmodule identisch sind, wenn also beispielsweise die Funktionsmodule ein einheitliches Datenformat für die Parameter verwenden. Hierdurch werden die Programmierung und die Pflege der Softwarestruktur in der Steuereinheit erheblich vereinfacht.

Bei einer vorteilhaften Ausgestaltung kann vorgesehen sein, dass eine Visualisierungseinheit vorgesehen ist, dass die Visualisierungseinheit über einen Informationskanal mit den Mitteln zur Parameterübergabe verbunden ist, dass in der Visualisierungseinheit für jedes Funktionsmodul ein grafisches Element bereitgestellt ist, dass die Visualisierung Mittel zur Auswahl, Darstellung und Veränderung der grafischen Elemente hat und dass die zum Aufruf eines Funktionsmoduls erforderlichen Parameter durch Auswahl des betreffenden grafischen Elements an das Verwaltungsmoduls übergebbar sind. Vorzugsweise hat die Visualisierungseinheit eine computerimplementierte, grafische Benutzeroberfläche, und die grafischen Elemente werden in Form von die jeweilige Funktionalität darstellende Icons oder Kurzbezeichnungen auf einem Display angezeigt.

Bei einer vorteilhaften Ausgestaltung kann vorgesehen sein, dass die zur Parametrierung eines Funktionsmoduls erforderlichen Parameter durch das entsprechende grafische Element in der Visualisierungseinheit darstellbar sind, beispielsweise durch Zahlenfelder und/oder Inkrement-/Dekrement-Tastenfelder, und dass die Parametrierung eines Funktionsmoduls durch Veränderung des entsprechenden grafischen Elements, insbesondere durch Parametereingabe an dem grafischen Element, durchführbar ist. Die Visualisierungseinheil zeigt somit in Echlzeit das in der Steuereinheit momentan ablaufende Steuerungsprogramm symbolisch, vorzugsweise als Blockschaltbild oder Programmablaufplan und/oder unter Verwendung der grafischen Elemente, an und ermöglicht die Änderung des Steuerungsprogramm in Echtzeit in situ und im übertragenen Sinne in vivo, also bei laufendem Steuerungsprogramm, insbesondere bei laufendem Verwaltungsmodul. Bei Setzen eines Parameters während der Ausführung des Steuerungsprogramms stellt das Verwaltungsmodul durch seine Programmierung sicher, dass kein instabiler Zustand auftritt, beispielsweise indem die Parameteränderung beziehungsweise -übergabe für Funktionsmodule durchgeführt wird, die augenblicklich nicht ausgeführt werden.

Bei einer vorteilhaften Ausgestaltung kann vorgesehen sein, dass der Informationskanal durch elektrische, magnetische und/oder optische Verbindungsmittel gebildet ist. Somit sind handelsübliche oder sonstwie verfügbare Visualisierungseinheiten mit der übrigen Steuereinheit vorteilhaft kombinierbar, wodurch der Entwicklungsaufwand für die Steuereinheit gering gehalten wird. Vorzugsweise ist die Visualisierungseinheit trennbar mit der übrigen Steuereinheit verbunden, insbesondere durch steckbare Anschlüsse oder durch induktive/kapazitive/optische Kopplung durch eine gegebenenfalls durchsichtige Gehäusewand der Steuereinheit und/oder der Visualisierungseinheit hindurch in Verbindung mit einer geeigneten Platzierung der Visualisierungseinheit relativ zur der übrigen Steuereinheit. Die Visualisierungseinheit ist somit vorteilhaft für mehrere Steuereinheiten einer Anlage nacheinander und/oder simultan einsetzbar. An den Steuereinheiten können jeweils Mittel zur Energieversorgung der Visualisierungseinheiten vorgesehen sein, die vorzugsweise berührungslos, insbesondere über kapazitive und/oder induktive Kopplung, ausgebildet sind oder über die elektrische Verbindung des Infornmationskanats angeschlossen sind. In diesem Fall ist eine separate Energieversorgung in der Visualisierungseinheit verzichtbar.

Bei einer vorteilhaften Ausgestaltung kann vorgesehen sein, dass die Steuereinheit von einem Frequenzumrichter oder einem Frequenzumrichtermotor umfasst ist. Hierdurch wird ein platzsparender Aufbau der Anlage ermöglicht, und das robuste Gehäuse des Frequenzumrichters oder des Frequenzumrichtermotors dient zusätzlich dem Schutz der Steuereinheit.

Bei einer vorteilhaften Ausgestaltung kann vorgesehen sein, dass durch wenigstens einen Aktor eine Antriebseinheit beeinflussbar ist. Eine Beeinflussung kann beispielsweise durch Vorgabe einer Drehzahl oder einer Sollposition oder eines Betriebsparameters an einen Frequenzumrichter der Antriebseinheit oder durch Bereitstellung eines Steuerstroms oder einer Steuerspannung für die Antriebseinheit erfolgen.

Bei einer vorteilhaften Ausgestaltung kann vorgesehen sein, dass durch wenigstens einen Sensor der Betriebszustand und/oder der Bewegungszustand einer Antriebseinheit erfassbar ist. Ein Sensor kann beispielsweise ein Temperatursensor, ein Strommesssensor, ein Spannungssensor, ein Winkelgeber oder ein weiterer Sensor, mit dem eine Diagnose einer Eigenschaft der Antriebseinheit und/oder der Umgebung der Antriebseinheit möglich ist, sein. Auch kombinierte Sensoren, die mehrere Messgrößen gleichzeitig erfassen und deren Messwerte getrennt oder kombiniert als Messsignal liefern, sind einsetzbar.

Bei einer vorteilhaften Ausgestaltung kann vorgesehen sein, dass die Visualisierungseinheit wenigstens ein Bedienfeld und/oder einen berührempfindlichen Bildschirm hat. Ein erfindungsgemäßes Bedienfeld kann als Folientastatur und/oder als Anordnung von induktiv, kapazitiv, magnetisch oder optisch durch eine abgeschlossene Gehäusewand angeschlossene Bedienelemente wie Knöpfe oder Rädchen ausgebildet sein.

Das erfindungsgemäße Verfahren kann mit Vorteil bei einem Verfahren zur Einrichtung der Steuerung einer Anlage eingesetzt werden, bei dem in einem Mikrokontroller ein Verwaltungsmodul in einer Endlosschleife ausgeführt wird, bei dem das Verwaltungsmodul anhand eines ersten Parametersatzes sukzessiv Funktionsmodule aufruft, bei dem die jeweils aufgerufene Funktionsmodul wenigstens einen Anschluss für einen Sensor der Anlage ausliest und/oder wenigstens einen Anschluss für einen Aktor der Anlage ansteuert und/oder wenigstens ein weiteres Funktionsmodul aufruft, dass die Funktionsmodule parametrierbar sind, bei dem die Parametrierung eines Funktionsmoduls dessen Ablauf beeinflusst und bei dem die folgenden Schritte ausgeführt werden
i) Eingabe in das Verwaltungsmodul eines ersten Parametersatzes, wobei das Verwaltungsmodul anhand des ersten Parametersatzes sukzessive Funktionsmodule aufruft.
ii) Eingabe in das Verwaltungsmodul eines zweiten Parametersatzes, wobei das Verwaltungsmodul anhand des zweiten Parametersatzes ein Funktionsmodul parametriert.
Durch die Übergabe des ersten Parametersatzes ist somit in dem Verwaltungsmodul festgelegt, welche Funktionsmodule überhaupt ausgeführt werden sollen. Das Funktionsmodul kann nun mit dem sukzessiven Aufruf der Funktionsmodule anhand der durch Parameter oder fest im System festgelegten Reihenfolge beginnen. Während des Ablaufs des Verwaltungsmoduls und/oder der Funktionsmodule sind nun die Eigenschaften der Funktionsmodule veränderbar zur Anpassung an die Erfordernisse der Anlage. Ein Funktionsmodul kann beispielsweise die Ansteuerung einer Drehzahlrampe oder das Anfahren einer Position oder das Abfahren eines Bewegungsablaufs an einer Antriebseinheit oder die Schaltung eines Steuerventils oder Steuerschützes bewirken, und die Parameter dienen zur Festlegung dieser Funktionen für den konkreten Anwendungsfall, beispielsweise durch Festlegung einer Rampensteigung und/oder eines Zielwerts und/oder einer Zeitdauer der Rampe, einer Festlegung einer Position oder einer Bewegungszeitdauer, Festlegung eines Bewegungsparameters, beispielsweise einer Schwingungsfrequenz, einer Geschwindigkeit, einer Schwingungsamplitude, einer Beschleunigung, einer Wegstrecke, einer Winkelstrecke, Festlegung einer Steuerspannung oder eines Steuerstroms oder einer Signalfrequenz oder Festlegung eines weiteren, die jeweilige Funktion konkretisierenden Wertes.

Gemäß einer Ausgestaltung der Erfindung kann vorgesehen sein, dass die Parametrierung des Verwaltungsmoduls durch Auswahl und Veränderung von grafischen Elementen an einer Visualisierungseinheit erfolgt. Eine Kompilierung der Steuerungssoftware nach Parameterveränderung, insbesondere nach Einbindung neuer Funktionsmodule, ist verzichtbar, und die Visualisierungseinheit kann in Echtzeit die momentan vorhandene und ausgeführte Steuerungssoftware anzeigen. Insbesondere ist eine Veränderung von Parametern bei laufender Anlage fehterarm möglich. Beispielsweise kann ein Bediener den Effekt einer Parameteränderung direkt und unmittelbar erfassen und beurteilen, ohne auf aufwendige Simulationssoftware zurückgreifen zu müssen, beispielsweise zur Abstimmung von Bewegungsabläufen aufeinander.

Gemäß einer Ausgestaltung der Erfindung kann vorgesehen sein, dass innerhalb einer Schleife der Endlosschleife wenigstens ein Funktionsmodul mehrfach aufgerufen wird, insbesondere mit jeweils unterschiedlichem Parametersatz. Somit ist eine Grundbibliothek von typischerweise in einer Anlage ablaufenden elementaren Verfahrensschritten oder Bewegungsabläufen bereitstellbar, aus der der Bediener den konkret beabsichtigten Ablauf zusammenstellt, wobei in der Struktur gleichartige Schrilte unter Verwendung desselben Funktionsmoduls, jedoch mit angepassten Parametern, verwendet werden. Ein Funktionsmodul kann hierbei zum Abfahren einer Rampe vorgesehen sein, ein weiteres beispielsweise zur Koordinierung von komplexen Bewegungsabläufen wie elektronischen Kurvenscheiben, Zusammenwirken von Antriebseinheiten an einem Drehtisch und dergleichen.

Bei einer Ausgestaltung der Erfindung kann vorgesehen sein, dass erster und zweiter Parametersatz von einem Parametersatz umfasst sind, die Festlegung der Steuerungssoftware mithin in einem Schritt erfolgt. Vorzugsweise ist die Änderung der Werlebelegung der Parametersätze jedoch getrennt durchführbar, wobei zur Bildung des vollen Parametersatzes die jeweils unverändert belassenen Parameter mit aufgenommen werden.

Das erfindungsgemäße Verfahren ist vorteilhaft bei einer erfindungsgemäßen Vorrichtung einsetzbar.

### Bezugszeichenliste

1 Steuereinheit
2 Steuerungsbasiseinheit
3 Visualisierungseinheit
4 Informationskanal
5 Bibliothek
6 Funktionsmodul
7 Steuerungssoftware
8 parametriertes Funktionsmodul
9 Aufruf
10 Display
11 grafisches Element
12 Bibliothek
13 Auswahl
14 parametriertes, grafisches Element
15 Verknüpfung
20 Verwaltungsmodul
21 Parameterblock
22 Verwaltungsblock
23 Signalblock
24 Abfolgeliste
25 Parameterblock
26 Funktionalitätsblock
27 Signalblock
28 29 Aktor
30 Sensor
31 erster Parametersatz
32 zweiter Parametersatz
33 Parametrierung
34 Steuerungssignal
35 Sensorsignal
36 Rückmeldungssignal

Die Erfindung wird nun anhand von Abbildungen näher erläutert:

Es zeigt
Figur 1 ein Blockschaltbild einer erfindungsgemäßen Steuereinheit mit Visualisierungseinheit,
Figur 2 ein Blockschaltbild einer Steuerungssoftware für die Steuereinheit.

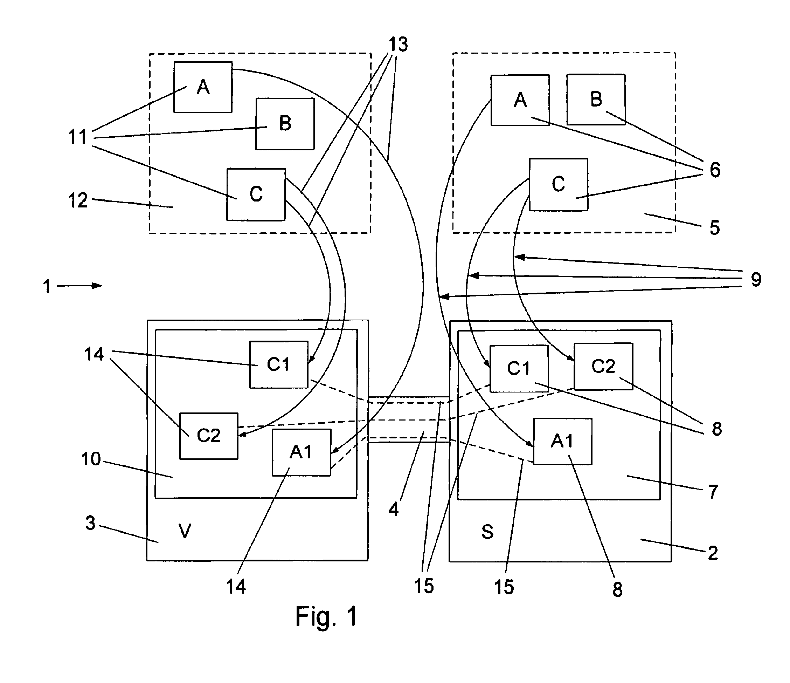

Eine in Figur 1 gezeigte Vorrichtung zur Steuerung einer nicht weiter dargestellten Anlage hat eine Steuereinheit 1, die zur Abarbeitung eines eines Steuerungsprogramms 7 der Anlage eingerichtet ist.

Die Steuereinheit 1 weist eine Steuerungsbasiseinheit 2 und eine Visualisierungseinheit 3 auf, die über einen Informationskanal 4 elektrisch verbunden sind.

In der Steuerungsbasiseinheit 3 ist ein nicht weiter gezeigter Mikrokontroller mit einem Datenspeicher vorhanden, der eine Bibliothek 5 umfasst, in der Funktionsmodule 6 abgelegt sind. Die Funktionsmodule 6 beschreiben jeweils einen elementaren oder komplexen Bewegungs- oder Verfahrensablauf, der in einer typischen Anlage auftritt, wobei zur Konkretisierung des Bewegungs- oder Verfahrenablaufs Parameter vorgesehen sind, durch deren frei wählbare Werte die Ausführung des betreffenden Funktionsmoduls 6 beeinflussbar ist.

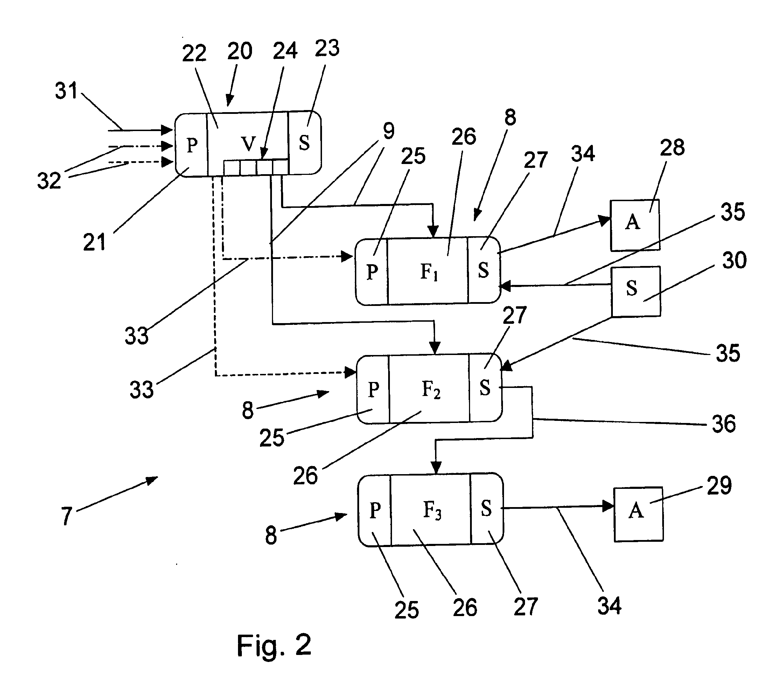

In dem Mikrokontroller läuft eine das Steuerungsprogramm bildende Steuerungssoftware 7 ab, deren prinzipieller Aufbau in Figur 2 dargestellt ist.

Das Steuerungsprogramm 7 weist Funktionsmodule 6, 8 als selbständige Bausteine auf. Mit diesen Funktionsmodulen 6, 8 können in Figur 2 ersichtliche Aktoren 28, 29 der Anlage angesteuert und/oder Sensoren 30 der Anlage ausgewertet werden und/oder es können Daten mit wenigstens einem weiteren Kommunikationsteilnehmer der Anlage ausgetauscht werden.

Die Steuereinheit hat ferner eine Visualisierungseinheit 3. Mit dieser Visualisierungseinheit 3 wird das Steuerungsprogramm 7 funktionell für einen Bediener dargestellt. Hierzu wird in der funktionellen Darstellung des Steuerungsprogramms 7 jedes Funktionsmodul 6, 8 des Steuerungsprogramms 7 durch ein Darstellungsmodul 11, 14 für den Bediener repräsentiert.

Zur Darstellung hat die Visualisierungseinheit 3 eine Bedienoberfläche mit Fensterstruktur. Jedes Darstellungsmodul 11, 14 stellt in der Bedienoberfläche wenigstens ein Fenster der Fensterstruktur und wenigstens ein aktives Steuerelement in diesem Fenster bereit.

In den Fenstern der Darstellungsmodule 11, 14 werden je nach Funktionalität des repräsentiertem Funktionsmodul 6, 8 Zustände dieses Funktionsmoduls 6, 8 angezeigt.

Mit den aktiven Steuerelementen kann je nach Funktionalität eine Parametrierung des mit diesem Darstellungsmodul 11, 14 repräsentierten Funktionsmoduls 6, 8 verändert werden.

Diese Parametrierung hat die Wirkung, dass das Verhalten des Funktionsmoduls 6, 8 beeinflusst wird.

Zur Zusammenstellung des Steuerungsprogramms 7 ist in der Steuereinheit 1 eine Bibliothek 5 mit ausführbaren Funktionsmodulen 6, 8 hinterlegt. Diese Funktionsmodule 6, 8 müssen also nicht zur Ausführung kompiliert werden, sondern liegen schon fertig ausführbar vor.

Ebenso ist in der Visualisierungseinheit 3 zu jedem Funktionsmodul 6, 8 der Bibliothek 12 ein zugeordnetes Darstellungsmodul 11, 14 vorgehalten.

Ferner sind nicht weiter ersichtliche Mittel zur Erzeugung einer Konfiguration des Steuerungsprogramms 7 ausgebildet. Diese Mittel umfassen Mittel zur Auswahl von Funktionsmodulen 6, 8 und Mittel zur Parametrierung der Funktionsmodule.

Mit den Mitteln zur Erzeugung einer Konfiguration des Steuerungsprogramms 7 können somit Funktionsmodule 6, 8 der Bibliothek 5 durch Aktivierung 13 des jeweils zugeordneten Darstellungsmoduls 11, 14 in das Steuerungsprogramm 7 eingebunden werden.

Die aktivierten Darstellungsmodule 14 bilden jeweils einen Teil der funktionellen Darstellung des Steuerungsprogramms 7 und können zur Laufzeit des Steuerungsprogramms 7 mittels der zugeordneten Fenster und/oder aktiven Steuerelemente zur Statusanzeige und/oder Parametrierung des jeweiligen Funktionsmoduls 6, 8 verwendet werden.

Die Mittel zur Erzeugung einer Konfiguration sind somit an der Visualisierungseinheit 3 ausgebildet. Sie sind in die Fensterstruktur der Bedienoberfläche integriert und stellen aktive Steuerelemente zur Aktivierung der Darstellungsmodule 11, 14 bereit. Die Auswahl 13 der Darstellungsmodule 11, 14 erfolgt durch drag&drop an einem berührempfindlichen Bildschirm der Visualisierungseinheit 3.

Über den ständig oder in regelmäßigen Zeitabständen aktiven Informationskanal werden die ausgewählten Darstellungsmodule 14 und die aktivierten Funktionsmodule 8 abgeglichen. Somit kann die Aktivierung 13 der Darstellungsmodule 11, 14 und das Einbinden von Funktionsmodulen 6, 8 in das Steuerprogramm 7 während der Laufzeit des Steuerungsprogramms 7 ausgeführt werden.

Die in Figur 2 dargestellte, das Steuerungsprogramm repräsentierende Steuerungssoftware 7 dient der Steuerung der Anlage, für die die Steuereinheit 1 vorgesehen ist, also der Bewirkung von Verfahrensschritten und Bewegungsabfolgen nach einem durch die Steuerungssoftware 7 festgelegten Plan.

Hierzu umfasst die Steuerungssoftware 7 parametrierte Funktionsmodule 8, welche durch Parametrierung aus den prototypischen, in der Bibliothek 5 abgespeicherten Funktionsmodulen 6 hervorgegangen sind.

Hierbei sind die parametrierten Funktionsmodule 8, bezeichnet durch "C1" und "C2", aus dem Funktionsmodul 8 mit der Bezeichnung "C" hervorgegangen, indem unterschiedliche Parametersätze verwendet worden. Beschreibt also Funktionsmodul "C" allgemein das Abfahren einer Rampe, so beschreiben "C1" bzw. "C2" jeweils das Abfahren unterschiedlicher Rampen mit unterschiedlichen Steigungen oder Start- und Zielwerten. Das parametrierte Funktionsmodul 8 mit der Bezeichnung "A1" ist dagegen aus dem Funktionsmodul 6 mit der Bezeichnung "A" abgeleitet und realisiert eine andere Funktionalität, beispielsweise die Ansteuerung und Statusabfrage eines Magnelventils oder eines Schülzes. Weitere Beispiele sind durch geeignete Auswahl und Parametrierung von Funktionsmodulen umsetzbar.

Die Einbindung der parametrierten Funktionsmodule 8 in die Steuerungssoftware 7 geschieht durch Aufruf 9 von dem und entsprechende Parameterübergabe an das betreffende Funktionsmodul 6 aus der Bibliothek 5.

Die Programmierung der Steuerungssoftware 7 geschieht mit Hilfe der Visualisierungseinheit 2. Hierzu hat die Visualisierungseinheit 2 ein berührempfindliches Display 10, auf dem grafische Elemente 11 aus einer Bibliothek 12 darstellbar sind. Die Bibliothek 12 ist in einem Speichermedium gespeichert, welches von der Visualisierungseinheit 2 umfasst ist.

Hierzu sind die grafischen Elemente 11 aus der Bibliothek 12 menügeführt oder per dragand-drop über das berührempfindliche Display 10, gegebenenfalls unterstützt von einer Tastatureingabe oder Betätigung eines Bedienfeldes oder von Bedienelementen auswählbar. Die grafischen Elemente 11 werden nach Auswahl 13 auf dem Display 10 als parametrierte grafische Elemente 14 angezeigt, wobei die relative Anordnung der parametrierten grafischen Elemente 14 die Reihenfolge und logische beziehungsweise funktionale Zusammengehörigkeit darstellt und wobei die Anzeige Schaltflächen zur Veränderung der Parameterwerte der parametrierten grafischen Elementen 14 an diesen Elementen bereitstellt.

Die parametrierten grafischen Elemente 14 mit den Bezeichnungen "C1" und "C2" sind aus dem in der Bibliothek 12 hinterlegten grafischen Element 11 mit der Bezeichnung "C" hervorgegangen, verwenden also die in diesem Element 11 definierten Programmzeilen beziehungsweise Eigenschaften, die die Darstellung des Elements 11 auf dem Display betreffen, und unterscheiden sich durch unterschiedliche Belegung der betreffenden Parameter mit Werten und gegebenenfalls durch eine Benennung, die dem Benutzer die Unterscheidung und Zuordnung erleichtert.

Durch die Auswahl 13 eines grafischen Elements 11 aus der Bibliothek 12 wird eine Verknüpfung 15 zu der Steuerungssoftware 7 instantan erzeugt, die den Aufruf 9 des entsprechenden Funktionsmoduls 6 bei der Ausführung der Steuerungssoftware 7 mit dem zu dem parametrierten grafischen Element 11 festgelegten Parametersatz bewirkt. Eine Änderung des Parametersatzes an dem parametrierten grafischen Element 11 bewirkt eine dementsprechende Änderung des betreffenden parametrierten Funktionsmoduls 8.

Durch diese Verknüpfungen 15, die physikalisch durch Datenübertragung über den Informationskanal 4 realisiert werden, ist somit eine strenge 1-1-Korrespondenz zwischen angezeigten parametrierten grafischen Elementen 14 und in der Steuerungssoftware 7 ausgeführten parametrierten Funktionsmodulen 8 hergestellt, wobei Änderungen, auch Neuauswahlen oder Löschungen, am Display 10 zeitnah, also in der Größenordnung einer oder weniger Taktdauern des Mikrokontrollers oder der Ausführungsdauer weniger Programmschritte der Steuerungssoftware 7, durch Änderung der Steuerungssoftware 7 nachvollzogen werden.

Figur 2 zeigt eine Prinzipdarstellung eines Teils der Steuerungssoftware 7 als Blockschaltbild. Dieses Blockschaltbild wird im Folgenden erläutert, wobei die erfindungsgemäßen Umsetzungen einer Steuereinheit 1 jedoch nicht auf das vorgestellte Beispiel beschränkt sind.

Die Steuerungssoftware 7 hat ein Verwaltungsmodul 20 und mehrere Funktionsmodule 8, die den parametrierten Funktionsmodulen 8 aus Figur 1 entsprechen.

Das Verwaltungsmodul 20 umfasst einen Parameterblock 21, einen Verwaltungsblock 22 und einen Signalblock 23, wobei der Parameterblock 21 ein Datenfeld für Parameter im Datenbereich hat und der Verwaltungsblock 22 und der Signalbock 23 im Befehlsspeicher des Mikrokontrollers vorgesehen sind.

Der Verwaltungsblock 22 hat insbesondere ein ausführbares Unterprogramm, das anhand einer Abfolgeliste 24 Aufrufe 9, die den Aufrufen 9 aus Figur 1 entsprechen, an die Funktionsmodule 8 generiert.

Die Funktionsmodule 8 haben jeweils einen Parameterblock 25, einen Funktionalitätsblock 26 und einen Signalblock 27. Der Parameterblock 25 hat zumindest ein Datenfeld, welches im Datenspeicher vorgesehen ist. Der Funktionalitätsblock 26 enthält wenigstens diejenigen Programmzeilen beziehungsweise Befehlsfolgen, die zur Umsetzung der Funktionalität des Funktionsmoduls 8 vorgesehen sind und die dieses Funktionsmodul 8 beziehungsweise sein zugehöriges prototypisches Funktionsmodule 6 in der Bibliothek 5 nach Figur 1 von den anderen Funktionsmodulen 6 unterscheiden. Diese Programmzeilen beziehungsweise Befehlsfolgen sind im Befehlsspeicher des Mikrokontrollers, insbesondere in der Bibliothek 5, abgelegt. Der Signalblock 27 eines Funktionsmoduls 8 hat wenigstens die Treiber zur Ansteuerung/Auslesung von Aktor/Sensor-Anschlüssen, die ebenfalls im Befehlsspeicher hinterlegt sind. Diese Anschlüsse sind mit beispielhaft und schematisch gezeigten Aktoren 28, 29 und Sensoren 30 verbunden.

Durch die Übergabe eines ersten Parametersatzes 31 über den Informationskanal 1 an das Verwaltungsmodul 20, insbesondere an dessen Parameterblock 21, wird die Abfolgeliste 24 befüllt. Das Verwaltungsmodul 30 generiert nun in der Reihenfolge dieser Abfolgeliste 24 Aufruf-Befehle 9, durch welche die betreffenden Funktionsmodule 8 sukzessive oder parallel gestartet und ausgeführt werden. Sind noch keine Parameter für diese Funktionsmodule 8 gesetzt, so werden voreingestellte Parameter für die Ausführung übernommen, mit denen ein sicherer Betrieb in jedem Fall möglich ist, beispielsweise Drehzahl Null oder Rampensteigung Null, oder es wird die Ausführung deaktiviert, bis Parameter gesetzt werden.

Werden von der Visualisierungseinheit 2 über den Informationskanal 4 weitere Parameter in Form eines zweiten Parametersatzes 32 an das Verwaltungsmodul 20, insbesondere an dessen Parameterblock 21, übergeben, so werden diese Parameter von dem Verwaltungsmodul 20 als Parameter für die Funktionsmodule 8 erkannt, beispielsweise durch vorliegende Zusatzinformation, und als Parametrierungen 33 an den Parameterblock 25 des betreffenden Funktionsmoduls 8 durch- oder weitergeleitet.

Der Funktionalitätsblock 26 eines aufgerufenen Funktionsmoduls 8 greift auf die in seinem Parameterblock 25 hinterlegten Parameter zu und führt in Abhängigkeit von den Parametern Befehle aus, die insbesondere den Signalblock 27 des Funktionsmoduls 8 und durch diesen die Steuereinheit 1 insgesamt zur Aussendung von Steuerungssignalen 34 an Aktoren 28, 29 beziehungsweise zum Auslesen von Sensorsignalen 35 von Sensoren 30 oder Rückmeldungssignalen 36 von weiteren, ebenfalls momentan oder bereits ausgeführten Funktionsmodulen 8 veranlassen. Derartige Rückmeldungssignale 36 können in einer Weiterbildung auch zum Aufruf eines weiteren Funktionsmoduls 8 genutzt werden.

Wie in Figur 2 gezeigt können hierbei verschiedene Funktionsmodule 8 denselben Sensor 30 auslesen, beispielsweise zu unterschiedlichen Zeiten. Es können auch verschiedene Funktionsmodule 8 unterschiedliche Sensoren 30 auslesen. Ebenso können verschiedene Funktionsmodule 8 auf unterschiedliche Aktoren 28, 29 oder auf denselben Aktor einwirken. Auch Kombinationen hiervon sind umsetzbar.

Der Signalblock 23 des Verwaltungsmoduls 20 ist mit einer nicht gezeigten Anzeige, beispielsweise mit LED-Elementen, verbunden, die Status- und Fehlermeldungen beim allgemeinen Betrieb der Steuerungssoftware 7, insbesondere des Verwaltungsblocks 22, anzeigt.

Mit der beschriebenen Vorrichtung wird das folgende Verfahren zur Einrichtung und Bedienung der Steuerung einer Anlage ausgeführt.

Hierzu wird die Steuerung also mit einer Vorrichtung ausgeführt, welche eine Steuereinheit 1 aufweist, die zur Abarbeitung eines Steuerungsprogramms 7 der Anlage eingerichtet ist.

Das Steuerungsprogramm weist Funktionsmodule 6, 8 auf, mit denen Aktoren 28, 29 der Anlage ansteuerbar und/oder Sensoren 30 der Anlage auswertbar und/oder Daten mit Kommunikationsteilnehmern der Anlage austauschbar sind.

Eine Visualisierungseinheit 3 der Steuereinheit 1 dient zur funktionellen Darstellung des Steuerungsprogramms 7 für einen Bediener. Hierzu werden in der Darstellung die Funktionsmodule 6, 8 durch Darstellungsmodule 11, 14 repräsentiert.

Bei dem Verfahren wird nun in einem ersten Schritt das Steuerungsprogramm 7 zur Einrichtung der Steuerung konfiguriert. Dies erfolgt dadurch, dass an der Visualisierungseinheit 3 wenigstens ein Darstellungsmodul 11, 14 aus einer Mehrzahl in einer Bibliothek 12 vorgehaltener Darstellungsmodule 11 ausgewählt wird. Durch die Auswahl 13 wird dieses Darstellungsmodul 14 und zur Anzeige gebracht und aktiviert.

Durch die unmittelbar erfolgende Übertragung der Information über die Auswahl 13 über den Informationskanal 4 wird erreicht, dass durch die Aktivierung bzw. Auswahl 13 des ausgewählten Darstellungsmoduls 14 ein diesem Darstellungsmodul 14 zugeordnetes, ausführbares Funktionsmodul 6, 8 aus einer Bibliothek 5 in der Steuereinheit 1 in das Steuerungsprogramm, also in die Steuerungssoftware 7, eingebunden wird.

Dieser Schritt wird so oft wiederholt, bis das gewünschte Steuerungsprogramm 7 erstellt ist. Eine Kompilierung der Steuerungssoftware des Steuerungsprogramms 7 ist nicht erforderlich, weil die Funktionsmodule 6 in der Bibliothek bereits fertig ausführbar vorliegen.

Bei dem Verfahren wird anschließend in wenigstens einem weiteren Schritt die Steuerung bedient. Hierzu wird/werden das eingebundene Funktionsmodul 8 oder die eingebundenen Funktionsmodule 8 über die Visualisierungseinheit 3 durch Parametrierung 33 angesteuert. Die Parametrierung erfolgt über in den Figuren nicht weiter ersichtliche aktive Steuerelemente des Darstellungsmoduls 6, 8 oder der Darstellungsmodule.

Die Parametrierung 33 bewirkt eine Beeinflussung des Ablaufs des eingebundene Funktionsmoduls 8 in dem Steuerungsprogramm 7.

Bei dem Ausführungsbeispiel wird die Einbindung der den aktivierten Darstellungsmodulen 14 zugeordneten Funktionsmodule 8 in das Steuerungsprogramm 7 durch Parameterübergabe an die Steuereinheit 1 bewirkt, indem ein erster Parametersatz 31, der Konfigurationsdaten enthält, an das Verwaltungsmodul 2 übergeben wird. Hierdurch wird die Abfolgeliste 24, nach der das Verwaltungsmodul 2 die Funktionsmodule 8 aufruft, festgelegt oder verändert.

Die Aktivierung 13 der Darstellungsmodule 11, 14 wird über an der Visualisierungseinheit 3 ausgebildete Mittel zur Erzeugung einer Konfiguration des Steuerungsprogramms 7 bewirkt. Diese Mittel umfassen Fenster und aktive Steuerelemente und dienen zur Übergabe und/oder Eingabe von Konfigurationsdaten 31 an die Visualisierungseinheit 3.

Zur Herstellung der strengen 1-1-Korrespondenz zwischen ausgewählten Darstellungsmodulen 14 und aktivierten Funktionsmodulen 8 sind die Konfigurationsdaten 31 zur Aktivierung eines Darstellungsmoduls identisch mit den Konfigurationsdaten 31 zur Einbindung des zugeordneten Funktionsmoduls 6, 8 in das Steuerungsprogramm 7.

Dadurch, dass die Eingabe der Konfigurationsdaten 31 zur Aktivierung eines Darstellungsmoduls 11, 14 und die Übergabe der Konfigurationsdaten 31 an die Steuereinheit 1 zur Einbindung des zugeordneten Funktionsmoduls 6, 8 in das Steuerungsprogramm 7 in einem Bedienschritt erfolgen, entspricht das an der Visualisierungseinheit 3 dargestellte Steuerungsprogramm zu jeder Zeit dem tatsächlich in der Steuerungssoftware 7 realisierten Sterungsprogramm.

Hierzu wird die funktionelle Darstellung des ablaufenden Steuerungsprogramms 7 an der Visualisierungseinheit 3 in Echtzeit aktualisiert.

Zur Steuerung der Anlage wird das Steuerungsprogramm 7 während weiterer Schritte in der Steuereinheit 1 ausgeführt.

Für die Steuerungseinheit 1 einer Anlage wird eine Architektur vorgeschlagen, die eine Erstellung der Steuerungssoftware durch Parametrierung 33 ermöglicht und auf Kompilierung der Software nach Anpassung an konkrete Anforderungen und insbesondere auf die Ergänzung eines Quellcodes um einbettende Definitions- und Konfigurationszeilen verzichtet. Hierzu wird vorgeschlagen, in einer Bibliothek 5 im Befehlsspeicher eines Mikrokontrollers fertig ausführbare Funktionsmodule 6, 8 zu hinterlegen, die zur Konkretisierung ihrer Funktionalität F₁, F₂, F₃ auf Parameter 31, 32 im Datenspeicher zugreifen, und ein weiteres, sogenanntes Verwaltungsmodul 2 auszuführen, dessen veränderbare Parameter 31 die Information 24 betreffen, welches Funktionsmodul 6, 8 wann und gegebenenfalls mit welchen Parametern 32 auszuführen ist. Das vorgeschlagene Verfahren zur Erstellung ist durch eine Visualisierungseinheit 3 in Echtzeit und bei laufendem Verfahren bedienbar, wobei die Visualisierungseinheit 3 eine 1-1-Wiedergabe der Steuerungssoftware 7 in ikonografischer Form vorsieht.

## Patentansprüche

1. Vorrichtung zur Steuerung einer Anlage,
mit einer Steuereinheit (1),
die zur Abarbeitung eines Steuerungsprogramms (7) der Anlage eingerichtet ist,
wobei das Steuerungsprogramm (7) Funktionsmodule (6, 8) aufweist,
mit denen Aktoren (28, 29) der Anlage ansteuerbar und/oder Sensoren (30) der Anlage auswertbar und/oder Daten mit wenigstens einem weiteren Kommunikationsteilnehmer der Anlage austauschbar sind,
und mit einer Visualisierungseinheit (3),
mit welcher das Steuerungsprogramm (7) funktionell für einen Bediener darstellbar ist,
wobei in der funktionellen Darstellung des Steuerungsprogramms (7) jedes Funktionsmodul (6, 8) des Steuerungsprogramms (7) durch ein Darstellungsmodul (11, 14) repräsentiert ist,
wobei die Visualisierungseinheit (3) eine Bedienoberfläche mit Fensterstruktur hat,
wobei jedes Darstellungsmodul (11, 14) wenigstens ein Fenster der Fensterstruktur und wenigstens ein aktives Steuerelement in dem Fenster bereitstellt,
wobei in dem Fenster eines Darstellungsmoduls (11, 14) Zustände des mit diesem Darstellungsmodul (11, 14) repräsentierten Funktionsmoduls (6, 8) anzeigbar sind und/oder mit dem wenigstens einen aktiven Steuerelement eine Parametrierung des mit diesem Darstellungsmodul (11, 14) repräsentierten Funktionsmoduls (6, 8) veränderbar ist,
wobei durch die Parametrierung das Verhalten des Funktionsmoduls (6, 8) beeinfiussbar ist,
wobei in der Steuereinheit (1) eine Bibliothek (5) mit ausführbaren Funktionsmodulen (6, 8) hinterlegt ist,
wobei in der Visualisierungseinheit (3) zu jedem Funktionsmodul (6. 8) der Bibliothek (12) ein zugeordnetes Darstellungsmodul (11, 14) vorgehalten ist,
wobei Mittel zur Erzeugung einer Konfiguration des Steuerurtgsprogramms (7) ausgebildet sind,
wobei mit den Mitteln zur Erzeugung einer Konfiguration des Steuerungsprogramms (7) Funktionsmodule (6, 8) der Bibliothek (5) durch Aktivierung (13) des zugeordneten Darstellungsmoduls (11, 14) in das Steuerungsprogramm (7) einbindbar sind,
wobei die aktivierten Darstellungsmodule (14) jeweils einen Teil der funktionellen Darstellung des Steuerungsprogramms (7) bilden und zur Laufzeit des Steuerungsprogramms (7) zur Statusanzeige und/oder Parametrierung des jeweiligen Funktionsmoduls (8) verwendbar sind, **dadurch gekennzeichnet, dass** die Aktivierung (13) der Darstellungsmodule (11,14) und das Einbinden von Funktionsmodulen (6, 8) in das Steuerprogramm (7) während der Laufzeit des Steuerungsprogramms (7) ausführbar ist, und dass
Befehlssequenzen der Funktionsmodule (6, 8) in einem unveränderlichen Befehisspeicher und die zur Steuerung des Ablaufs erforderlichen Parameter in einem veränderlichen Datenspeicher abgelegt sind, wobei eine Konfiguration des Steuerungsprogramms (7) bei unveränderten Befehlssquenzen lediglich durch Festlegung von Parametern im Datenspeicher durchführbar ist.

2. Vorrichtung nach einem der vorangegangenen Ansprüche,
**dadurch gekennzeichnet, dass**
die Mittel zur Erzeugung einer Konfiguration an der Visualisierungseinheit (3) ausgebildet sind, insbesondere in die Fensterstruktur der Bedienoberfläche integriert sind und/oder aktive Steuerelemente zur Aktivierung (13) der Darstellungsmodule (11, 14) bereitstellen.

3. Vorrichtung nach einem der vorangegangenen Ansprüche,
**dadurch gekennzeichnet, dass**
die Steuereinheit (1) zum kontinuierlichen Ausführen eines Verwaltungsmoduls (20) eingerichtet ist,
dass an der Steuereinheit (1) Mittel zur Parameterübergabe ausgebildet sind, mit welchen das kontinuierlich ausgeführte Verwaltungsmodul (20) parametrierbar ist,
wobei die Funktionsmodule (6, 8) der Bibliothek (5) durch Parametrierung des Verwaltungsmoduls (2) aufrufbar sind
und die Funktionsmodule (6, 8) durch Parametrierung (33) steuerbar sind,
wobei die Parametrierung (33) der Funktionsmodule (6, 8) durch Parameterübergabe an das Verwaltungsmodul (20) durchführbar ist.

4. Vorrichtung nach einem der vorangegangenen Ansprüche,
**dadurch gekennzeichnet, dass**
jedes Funktionsmodul (6, 8) einen ausführbaren Funktionalitätsblock (26) hat, wobei der Funktionalitätsblock (26) durch eine Parametrierung (33) steuerbar ist und/oder
jedes Funktionsmodul (6, 8) einen Parameterblock (25) hat zur Aufnahme der bei einer Parametrierung (33) übergebenen Parameter (31, 32)
und/oder
jedes Funktionsmodul (6, 8) einen Signalblock (23) hat, mit dem ein Anschluss für einen Aktor (28, 29) ansteuerbar und/oder ein Anschluss für einen Sensor (30) auslesbar und/oder ein weiteres Funktionsmodul (6, 8) ansteuerbar ist,
insbesondere wobei
die Signalblöcke (23) der Funktionsmodule (6, 8) identisch sind und/oder die Parameterblöcke (23) der Funktionsmodule (6, 8) identisch sind.

5. Vorrichtung nach Anspruch 3,
**dadurch gekennzeichnet, dass**
die aktiven Steuerelemente Mittel zur Parameterierung des Verwaltungsmoduls (20) und/oder der Funktionsmodule (6, 8) aufweisen.

6. Vorrichtung nach einem der vorangegangenen Ansprüche,
**dadurch gekennzeichnet, dass**
die Visualisierungseinheit (3) trennbar mit der übrigen Steuereinheit (2) verbunden ist. und/oder
die Steuereinheit (1, 2) von einem Frequenzumrichter oder einem Frequenzunirichtermotor umfasst ist und/oder
dass durch wenigstens einen Aktor (28, 29) eine Antriebseinheit beeinflussbar ist und/oder dass durch wenigstens einen Sensor (30) der Betriebszustand und/oder der Bewegungszustand einer Antriebseinheit erfassbar ist und/oder
dass die Visualisierungseinheit (3) wenigstens ein Bedienfeld und/oder einen berührempfindlichen Bildschirm hat.

7. Verfahren zur Einrichtung und Bedienung der Steuerung einer Anlage,
wobei die Steuerung mit einer Vorrichtung ausgeführt wird,
welche eine Steuereinheit (1) aufweist,
die zur Abarbeitung eines Steuerungsprogramms (7) der Anlage eingerichtet ist,
wobei das Steuerungsprogramm Funktionsmodule aufweist,
mit denen Aktoren (28, 29) der Anlage ansteuerbar und/oder Sensoren (30) der Anlage auswertbar und/oder Daten mit Kommunikationsteilnehmern der Anlage austauschbar sind,
und die Vorrichtung weiter eine Visualisierungseinheit (3) aufweist,
mit welcher das Steuerungsprogramm (7) funktionell für einen Bediener darstellbar ist,
wobei in der Darstellung die Funktionsmodule (6, 8) durch Darstellungsmodule (11, 14) reprasentiert sind,
wobei in einem ersten Schritt das Steuerungsprogramm (7) zur Einrichtung der Steuerung konfiguriert wird,
indem an der Visualisierungseinheit (3) wenigstens ein Darstellungsmodul (11, 14) aus einer Mehrzahl in einer Bibliothek (12) vorgehaltener Darstellungsmodule (11) ausgewählt und zur Anzeige gebracht und aktiviert wird,
wobei durch die Aktivierung (13) des wenigstens einen Darsteltungsmoduls (11, 14) wenigstens ein diesem Darstellungsmodul (11, 14) zugeordnetes, ausführbares Funktionsmodul (6, 8) aus einer Bibliothek (5) in der Steuereinheit (1) in das Steuerungsprogramm (7) eingebunden wird,
**dadurch gekennzeichnet, dass** die Aktivierung (13) der Darstellungsmodule (11, 14) und das Einbinden von Funktionsmodulen (6, 8) in das Steuerprogramm (7) während der Laufzeit des Steuerungsprogramms (7) ausgeführt werden, und dass Befehlssequenzen der Funktionsmodule (6, 8) in einem unveränderlichen Befehlsspeicher und die zur Steuerung des Ablaufs erforderlichen Parameter in einem veränderlichen Datenspeicher abgelegt sind, wobei eine Konfiguration des Steuerungsprogramms (7) bei unveränderten Befehlssquenzen der Funktionsmodule (6, 8) lediglich durch Festlegung von Parametern der Funktionsmodule (7) in einem Datenspeicher durchgeführt wird,
und wobei in wenigstens einem weiteren Schritt die Steuerung bedient wird, indem das eingebundene Funktionsmodul (6, 8) oder die eingebundenen Funktionsmodule über die Visualisierungseinheit (3), insbesondere über aktive Steuerelemente des Darstellungsmoduls (6, 8) oder der Darstellungsmodule, durch Parametrierung (33) angesteuert wird/werden,
wobei die Parametrierung (33) eines eingebundenen Funktionsmoduls (6, 8) den Ablauf dieses Funktionsmoduls (6, 8) in dem Steuerungsprogramm (7) bestimmt und/oder beeinflusst.

8. Verfahren nach Anspruch 7,
**dadurch gekennzeichnet, dass**
die Einbindung der den aktivierten Darstellungsmodulen (14) zugeordneten Funktionsmodule (8) in das Steuerungsprogramm (7) durch Parameterübergabe, insbesondere Übergabe von Konfigurationsdaten (31), an die Steuereinheit (1) bewirkt wird.

9. Verfahren nach einem der Ansprüche 7 oder 8,
**dadurch gekennzeichnet, dass**
die Aktivierung (13) der Darstellungsmodule (11, 14) über an der Visualisierungseinheit (3) ausgebildete Mittel zur Erzeugung einer Konfiguration des Steuerungsprogramms (7) bewirkt wird, insbesondere durch Übergabe und/oder Eingabe von Konfigurationsdaten (31) an die Visualisierungseinheit (3).

10. Verfahren nach einem der Ansprüche 7 bis 9,
**dadurch gekennzeichnet, dass**
Konfigurationsdaten (31) zur Aktivierung eines Darstellungsmoduls identisch sind mit Konfigurationsdaten (31) zur Einbindung des zugeordneten Funktionsmoduls (6, 8) in das Steuerungsprogramm (7).

11. Verfahren nach Anspruch 10,
**dadurch gekennzeichnet, dass**
die Eingabe der Konfigurationsdaten (31) zur Aktivierung eines Darstetlungsmoduls (11, 14) und die Übergabe der Konfigurationsdaten (31) an die Steuereinheit (1) zur Einbindung des zugeordneten Funktionsmoduls (6, 8) in das Steuerungsprogramm (7) in einem Bedienschritt erfolgen.

12. Verfahren nach einem der Ansprüche 7 bis 11,
**dadurch gekennzeichnet, dass**
die funktionelle Darstellung des ablaufenden Steuerungsprogramms (7) an der Visualisierungseinheit (3) in Echtzeit aktualisiert wird.

13. Verfahren nach einem der Ansprüche 7 bis 12,
**dadurch gekennzeichnet, dass**
das Steuerungsprogramm (7) zumindest während des wenigstens einen weiteren Schrittes in der Steuereinheit (1) ausgeführt wird und die Anlage steuert.

14. Verfahren nach einem der Ansprüche 7 bis 13,
**dadurch gekennzeichnet, dass**
eine Vorrichtung nach einem der Ansprüche 1 bis 6 eingesetzt wird.

## Claims

1. Device for controlling a system,
having a control unit (1),
which is set up to execute a control program (7) of the system,
wherein the control program (7) has functional modules (6, 8),
by which actuators (28, 29) of the system are controllable and/or sensors (30) of the system are evaluable and/or data are exchangeable with at least one further communications user of the system,
and having a visualization unit (3),
by which the control program (7) is functionally displayable for an operator,
wherein in the functional display of the control program (7), each functional module (6, 8) of the control program (7) is represented by a display module (11, 14),
wherein the visualization unit (3) has an operating surface with a window structure,
wherein each display module (11, 14) provides at least one window of the window structure and at least one active control element in the window,
wherein in the window of a display module (11, 14), states of the functional module (6, 8) represented by this display module (11, 14) are displayable and/or by at least one active control element, a parameterization of the functional module (6, 8) represented by this display module (11, 14) is changeable,
wherein the behaviour of the functional module (6, 8) is influenceable by the parameterization,
wherein a library (5) with executable functional modules (6, 8) is stored in the control unit (1),
wherein a display module (11, 14) assigned to each functional module (6, 8) of the library (12) is held in the visualization unit (3),
wherein means for generating a configuration of the control program (7) are formed,
wherein, by the means for generating a configuration of the control program (7), functional modules (6, 8) of the library (5) are incorporable into the control program (7) by activation (13) of the assigned display module (11, 14),
wherein the activated display modules (14) each form a part of the functional display of the control program (7) and are usable, for the running time of the control program (7), for the status display and/or parameterization of the respective functional module (8),
**characterized in that**
the activation (13) of the display modules (11, 14) and the incorporation of functional modules (6, 8) into the control program (7) is performable during the running time of the control program (7), and **in that** command sequences of the functional modules (6, 8) are stored in an unchangeable command memory and the parameters required for controlling the running are stored in a changeable data memory, a configuration of the control program (7) being performable, with unchanged command sequences, just by setting parameters in the data memory.

2. Device according to one of the preceding claims,
**characterized in that**
the means for generating a configuration are formed on the visualization unit (3), in particular are integrated into the window structure of the operating surface and/or provide active control elements for the activation (13) of the display modules (11, 14).

3. Device according to one of the preceding claims,
**characterized in that**
the control unit (1) is set up for continuous execution of an administration module (20),
**in that** on the control unit (1) are formed means for parameter transfer, by which the continuously executed administration module (20) is parameterizable,
wherein the functional modules (6, 8) of the library (5) are callable by parameterization of the administration module (20)
and the functional modules (6, 8) are controllable by parameterization (33),
wherein the parameterization (33) of the functional modules (6, 8) is performable by parameter transfer to the administration module (20).

4. Device according to one of the preceding claims,
**characterized in that**
each functional module (9, 8) has an executable functionality block (26), the functionality block (26) being controllable by a parameterization (33)
and/or
each functional module (6, 8) has a parameter block (25) for receiving the parameters (31, 32) transferred during the parameterization (33)
and/or
each functional module (6, 8) has a signal block (23), by which a connection for an actuator (28, 29) is controllable and/or a connection for a sensor (30) is readable and/or a further functional module (6, 8) is controllable,
in particular wherein
the signal blocks (23) of the functional modules (6, 8) are identical and/or
the parameter blocks (25) of the functional modules (6, 8) are identical.

5. Device according to Claim 3,
**characterized in that**
the active control elements have means for the parameterization of the administration module (20) and/or the functional modules (6, 8).

6. Device according to one of the preceding claims,
**characterized in that**
the visualization unit (3) is connected separably to the rest of the control unit (2)
and/or
the control unit (1, 2) is encompassed by a frequency converter or a frequency converter motor and/or
**in that** a drive unit is influenceable by at least one actuator (28, 29) and/or
**in that** the operating state and/or the movement state of a drive unit is detectable by at least one sensor (30) and/or
**in that** the visualization unit (3) has at least one control panel and/or a touch-sensitive screen.

7. Method for setting up and operating the control of a system,
wherein the control is carried out by a device which has a control unit (1)
which is set up to execute a control program (7) of the system,
wherein the control program has functional modules,
by which actuators (28, 29) of the system are controllable and/or sensors (30) of the system are evaluable and/or data are exchangeable with communications users of the system,
and the device further has a visualization unit (3),
by which the control program (7) is functionally displayable for an operator,
wherein in the display the functional modules (6, 8) are represented by display modules (11, 14),
wherein in a first step the control program (7) is configured for setting up the control by selecting and displaying and activating on the visualization unit (3) at least one display module (11, 14) from a plurality of display modules (11) held in a library (12),
wherein by the activation (13) of the at least one display module (11, 14), at least one executable functional module (6, 8), assigned to this display module (11, 14), from a library (5) in the control unit (1) is incorporated into the control program (7),
**characterized in that**
the activation (13) of the display modules (11, 14) and the incorporation of functional modules (6, 8) into the control program (7) is performable during the running time of the control program (7), and **in that** command sequences of the functional modules (6, 8) are stored in an unchangeable command memory and the parameters required for controlling the running are stored in a changeable data memory, a configuration of the control program (7) being performed, with unchanged command sequences of the functional modules (6, 8), just by setting parameters of the functional modules (6, 8) in a data memory,
and wherein in at least one further step, the control is operated by controlling the incorporated functional module (6, 8) or the incorporated functional modules via the visualization unit (3), in particular via active control elements of the display module (11, 14) or the display modules, by parameterization (33),
wherein the parameterization (33) of an incorporated functional module (6, 8) determines and/or influences the running of this functional module (6, 8) in the control program (7).

8. Method according to Claim 7,
**characterized in that**
the incorporation of the functional modules (8), assigned to the activated display modules (14), into the control program (7) is effected by parameter transfer, in particular transfer of configuration data (31), to the control unit (1).

9. Method according to one of Claims 7 or 8,
**characterized in that**
the activation (13) of the display modules (11, 14) is effected via means, formed on the visualization unit (3), for generating a configuration of the control program (7), in particular by transfer and/or input of configuration data (31) to the visualization unit (3).

10. Method according to one of Claims 7 to 9,
**characterized in that**
configuration data (31) for the activation of a display module are identical to configuration data (31) for the incorporation of the assigned functional module (6, 8) into the control program (7).

11. Method according to Claim 10,
**characterized in that**
the input of the configuration data (31) for the activation of a display module (11, 14) and the transfer of the configuration data (31) to the control unit (1) for the incorporation of the assigned functional module (6, 8) into the control program (7) take place in one operating step.

12. Method according to one of Claims 7 to 11,
**characterized in that**
the functional display of the running control program (7) on the visualization unit (3) is updated in real time.

13. Method according to one of Claims 7 to 12,
**characterized in that**
the control program (7) is executed at least during the at least one further step in the control unit (1) and controls the system.

14. Method according to one of Claims 7 to 13,
**characterized in that**
a device according to one of Claims 1 to 6 is used.

## Revendications

1. Dispositif de commande d'une installation,
comprenant une unité de commande (1)
agencée en vue de l'exécution d'un programme de commande (7) de ladite installation, ledit programme de commande (7) comportant des modules fonctionnels (6, 8) au moyen desquels il est possible d'activer des actionneurs (28, 29) de l'installation, et/ou d'interpréter des capteurs (30) de ladite installation, et/ou d'échanger des données avec au moins un autre élément associé à la communication, dans ladite installation,
et une unité de visualisation (3)
autorisant une représentation fonctionnelle du programme de commande (7), dédiée à un utilisateur,
sachant que, dans ladite représentation fonctionnelle du programme de commande (7), chaque module fonctionnel (6, 8) dudit programme de commande (7) est visualisé par un module de représentation (11, 14),
ladite unité de visualisation (3) offrant une surface d'actionnement dotée d'une structure à fenêtres,
chaque module de représentation (11, 14) procurant au moins une fenêtre de ladite structure à fenêtres, et au moins un élément de commande actif dans ladite fenêtre,
des états du module fonctionnel (6, 8), visualisé par un module de représentation (11, 14), pouvant être affichés dans la fenêtre de ce module de représentation (11, 14),
et/ou l'élément de commande actif, à présence minimale, permettant de modifier un paramétrage du module fonctionnel (6, 8) visualisé par ce module de représentation (11, 14),
le paramétrage permettant d'influencer le comportement dudit module fonctionnel (6, 8), sachant qu'une bibliothèque (5), renfermant des modules fonctionnels exécutables (6, 8), est conservée dans l'unité de commande (1),
sachant qu'un module de représentation (11, 14), affecté à chaque module fonctionnel (6, 8) de la bibliothèque (12), est consigné dans l'unité de visualisation (3),
des moyens étant réalisés en vue d'engendrer une configuration du programme de commande (7),
sachant que lesdits moyens de génération d'une configuration du programme de commande (7) permettent d'intégrer des modules fonctionnels (6, 8) de la bibliothèque (5) dans ledit programme de commande (7), par activation (13) du module de représentation (11, 14) associé,
sachant que les modules de représentation (14) activés forment respectivement une partie de la représentation fonctionnelle du programme de commande (7) et peuvent être utilisés, pour la durée d'exécution dudit programme de commande (7), en vue de l'affichage d'états et/ou du paramétrage du module fonctionnel (8) respectif,
**caractérisé par le fait que**
l'activation (13) des modules de représentation (11, 14), et l'intégration de modules fonctionnels (6, 8) dans le programme de commande (7), peuvent être effectuées pendant la durée d'exécution dudit programme de commande (7) ; et **par le fait que** des séquences d'instructions des modules fonctionnels (6, 8) sont déposées dans une mémoire d'instructions invariable, et les paramètres requis par la commande du processus sont déposés dans une mémoire de données variable, une configuration dudit programme de commande (7), en présence de séquences d'instructions non modifiées, pouvant être exécutée uniquement par ferme détermination de paramètres dans ladite mémoire de données.

2. Dispositif selon l'une des revendications précédentes,
**caractérisé par le fait que**
les moyens de génération d'une configuration sont ménagés sur l'unité de visualisation (3), font notamment partie intégrante de la structure à fenêtres de la surface d'actionnement, et/ou procurent des éléments de commande actifs ciblant l'activation (13) des modules de représentation (11, 14).

3. Dispositif selon l'une des revendications précédentes,
**caractérisé par le fait que**
l'unité de commande (1) est agencée en vue de l'exécution continue d'un module de gestion (20) ; et
**par le fait que** ladite unité de commande (1) comporte des moyens de transfert de paramètres, permettant un paramétrage dudit module de gestion (20) exécuté en continu, sachant que les modules fonctionnels (6, 8) de la bibliothèque (5) peuvent être appelés par paramétrage dudit module de gestion (20),
et que lesdits modules fonctionnels (6, 8) peuvent être pilotés par paramétrage (33),
le paramétrage (33) desdits modules fonctionnels (6, 8) pouvant être effectué par transfert de paramètres audit module de gestion (20).

4. Dispositif selon l'une des revendications précédentes,
**caractérisé par le fait que**
chaque module fonctionnel (6, 8) présente un bloc de fonctionnalité (26) exécutable, ledit bloc de fonctionnalité (26) pouvant être piloté par un paramétrage (33),
et/ou
chaque module fonctionnel (6, 8) présente un bloc de paramètres (25), en vue de recevoir les paramètres (31, 32) transférés lors d'un paramétrage (33),
et/ou
chaque module fonctionnel (6, 8) présente un bloc de signaux (23) au moyen duquel il est possible d'activer un raccord dévolu à un actionneur (28, 29), et/ou de sélectionner un raccord dévolu à un capteur (30), et/ou d'activer un autre module fonctionnel (6, 8), sachant notamment
que les blocs de signaux (23) des modules fonctionnels (6, 8) sont identiques, et/ou que les blocs de paramètres (25) desdits modules fonctionnels (6, 8) sont identiques.

5. Dispositif selon la revendication 3,
**caractérisé par le fait que**
les éléments de commande actifs présentent des moyens ciblant le paramétrage du module de gestion (20) et/ou des modules fonctionnels (6, 8).

6. Dispositif selon l'une des revendications précédentes,
**caractérisé par le fait que**
l'unité de visualisation (3) est reliée au reste de l'unité de commande (2) avec faculté de dissociation,
et/ou
ladite unité de commande (1, 2) est constituée d'un mutateur de fréquence ou d'un moteur de mutation de fréquence ; et/ou
**par le fait qu'**une unité d'entraînement peut être influencée par au moins un actionneur (28, 29) ; et/ou
**par le fait que** l'état de fonctionnement et/ou l'état de mouvement d'une unité d'entraînement peu(ven)t être détecté(s) par au moins un capteur (30) ; et/ou par **le fait que** l'unité de visualisation (3) comporte au moins une zone de maniement et/ou un écran tactile.

7. Procédé d'agencement et d'actionnement de la commande d'une installation, ladite commande étant exécutée au moyen d'un dispositif
équipé d'une unité de commande (1)
agencée en vue de l'exécution d'un programme de commande (7) de ladite installation, ledit programme de commande comportant des modules fonctionnels au moyen desquels il est possible d'activer des actionneurs (28, 29) de l'installation, et/ou d'interpréter des capteurs (30) de ladite installation, et/ou d'échanger des données avec des éléments associés à la communication, dans ladite installation,
et ledit dispositif étant pourvu, par ailleurs, d'une unité de visualisation (3) autorisant une représentation fonctionnelle du programme de commande (7), dédiée à un utilisateur,
sachant que, dans ladite représentation, les modules fonctionnels (6, 8) sont visualisés par des modules de représentation (11, 14),
ledit programme de commande (7) étant configuré lors d'une première étape, en vue de l'agencement de la commande,
en ce sens qu'au moins un module de représentation (11, 14) est sélectionné au sein d'une multiplicité de modules de représentation (11) consignés dans une bibliothèque (12), est affiché, puis activé sur ladite unité de visualisation (3),
sachant que, du fait de l'activation (13) du module de représentation (11, 14) à présence minimale, au moins un module fonctionnel exécutable (6, 8), affecté à ce module de représentation (11, 14), est intégré dans ledit programme de commande (7) à partir d'une bibliothèque (5) située dans l'unité de commande (1),
**caractérisé par le fait que**
l'activation (13) des modules de représentation (11, 14), et l'intégration de modules fonctionnels (6, 8) dans le programme de commande (7), sont effectuées pendant la durée d'exécution dudit programme de commande (7) ; et **par le fait que** des séquences d'instructions des modules fonctionnels (6, 8) sont déposées dans une mémoire d'instructions invariable, et les paramètres requis par la commande du processus sont déposés dans une mémoire de données variable, une configuration dudit programme de commande (7), en présence de séquences d'instructions inchangées des modules fonctionnels (6, 8), étant exécutée uniquement par ferme détermination de paramètres desdits modules fonctionnels (6, 8) dans une mémoire de données,
et ladite commande étant actionnée au cours d'au moins une étape supplémentaire, en ce sens que le module fonctionnel intégré (6, 8) ou les modules fonctionnels intégrés est/sont activé(s) par paramétrage (33), par l'intermédiaire de l'unité de visualisation (3) et, en particulier, par l'intermédiaire d'éléments de commande actifs du module de représentation (11, 14) ou des modules de représentation,
sachant que le paramétrage (33) d'un module fonctionnel intégré (6, 8) détermine et/ou influence l'accomplissement de ce module fonctionnel (6, 8) dans ledit programme de commande (7).

8. Procédé selon la revendication 7,
**caractérisé par le fait que**
l'intégration des modules fonctionnels (8) affectés aux modules de représentation (14) activés, dans le programme de commande (7), est provoquée par transfert de paramètres et, en particulier, par transfert de données de configuration (31) à l'unité de commande (1).

9. Procédé selon l'une des revendications 7 ou 8,
**caractérisé par le fait que**
l'activation (13) des modules de représentation (11, 14) est provoquée par des moyens ménagés sur l'unité de visualisation (3) et ciblant la génération d'une configuration du programme de commande (7), en particulier par transfert et/ou entrée de données de configuration (31) à ladite unité de visualisation (3), ou dans cette dernière.

10. Procédé selon l'une des revendications 7 à 9,
**caractérisé par le fait que**
des données de configuration (31), assignées à l'activation d'un module de représentation, sont identiques à des données de configuration (31) assignées à l'intégration, dans le programme de commande (7), du module fonctionnel (6, 8) associé.

11. Procédé selon la revendication 10,
**caractérisé par le fait que**
l'entrée des données de configuration (31) assignées à l'activation d'un module de représentation (11, 14) et le transfert, à l'unité de commande (1), des données de configuration (31) assignées à l'intégration du module fonctionnel (6, 8) associé dans le programme de commande (7), sont effectués en une étape d'actionnement.

12. Procédé selon l'une des revendications 7 à 11,
**caractérisé par le fait que**
la représentation fonctionnelle du programme de commande (7) en cours de déroulement est actualisée en temps réel sur l'unité de visualisation (3).

13. Procédé selon l'une des revendications 7 à 12,
**caractérisé par le fait que**
le programme de commande (7) est exécuté au moins au cours de l'étape supplémentaire à présence minimale, dans l'unité de commande (1), et pilote l'installation.

14. Procédé selon l'une des revendications 7 à 13,
**caractérisé par**
l'utilisation d'un dispositif conforme à l'une des revendications 1 à 6.
